# EUROPÄISCHE PATENTSCHRIFT

(11) **EP 0 635 655 B1**
(45) Veröffentlichungstag und Bekanntmachung des Hinweises auf die Patenterteilung: **08.05.1996**
(21) Anmeldenummer: 94110944.9
(22) Anmeldetag: 14.07.1994
(51) Int. Cl.: F16F 9/46

(54) **Hydraulischer Schwingungsdämpfer für Kraftfahrzeuge**
Hydraulic vibration-damper for motor vehicles
Amortisseur hydraulique de vibrations pour véhicules automobiles

(30) Priorität: 21.07.1993 DE 4324443
(43) Veröffentlichungstag der Anmeldung: 25.01.1995
(73) Patentinhaber: August Bilstein GmbH & Co. KG, D-58256 Ennepetal (DE); MERCEDES-BENZ AG, D-70327 Stuttgart (DE)
(72) Erfinder: Schmidt, Klaus, Dipl.-Ing., D-51467 Bergisch Gladbach (DE); Huang, Zhen, Dr., D-42389 Wuppertal (DE); Scheerer, Hans, Dipl.-Ing., D-73734 Esslingen (DE); Opara, Andreas, Dipl.-Ing., D-70736 Fellbach (DE)

(56) Entgegenhaltungen:
- DE-A- 4 007 180
- DE-A- 4 130 869
- DE-U- 9 210 834
- GB-A- 1 561 932

## Beschreibung

Hydraulischer Schwingungsdämpfer für Kraftfahrzeuge, bestehend aus einem mit Dämpfungsflüssigkeit gefüllten Dämpferzylinder, in dem ein mit einer Kolbenstange verbundener, mit druckabhängigen Drosselventilen versehener Dämpfungskolben gleitet, der den Dämpferzylinder in zwei Arbeitsräume unterteilt, und bei dem zur Verstellung der Dämpfungskraft eine Bypass-Passage vorgesehen ist, deren Strömungsquerschnitt von einem außerhalb des Schwingungsdämpfers angeordneten, in einem rohrförmigen Ventilgehäuse untergebrachten Bypass-Ventilsystem steuerbar ist.

Ein derartiger hydraulischer Schwingungsdämpfer ist aus dem Deutschen Gebrauchsmuster GM 92 10 843 bekannt, wobei das außerhalb des Schwingungsdämpfers angeordnete Bypass-Ventilsystem aus zwei in einem zylinderförmigen Ventilgehäuse axial hintereinander angeordneten Dämpfungsventilen besteht. Jedes der Dämpfungsventile ist aus einem elektromagnetischen ansteuerbaren, mit einem Durchlaß zusammenarbeitenden axial beweglichen Steuerschieber und einem strömungstechnisch zu diesem parallel oder in Reihe geschalteten druckabhängigen Ventil aufgebaut. Zur Befestigung des Dämpfungsventilsystems umgibt das Mantelrohr des Schwingungsdämpfers ein zylinderförmiges Modulgehäuse, das über Sprengringe am Mantelrohr befestigt ist.

Das Modulgehäuse wird über ein Verbindungsteil dem Ventilgehäuse des Dämpfungsventilsystems verschweißt oder verlötet. Die Strömungsverbindungen zwischen dem Schwingungsdämpfer und dem Bypass-Ventilsystem werden über Durchlässe sowohl im zylinderförmigen Modulgehäuse als auch im Verbindungsteil gebildet. Der Nachteil einer derartigen Befestigung liegt in der notwendigen Positionierung der großen Anzahl von Einzelteilen zueinander.

In der Deutschen Patentschrift DE 40 07 180 C2 ist eine weitere Befestigungsmöglichkeit eines außerhalb des Dämpferzylinders befindlichen, als separates Bauteil ausgeführten Bypass-Ventilsystems beschrieben. Es handelt sich dabei um eine Steckverbindung zwischen dem Ventilgehäuse des Bypass-Ventilsystems und dem Außenzylinder des Schwingungsdämpfers, die mittels einer Schelle und mindestens zweier Schrauben fixiert ist. Neben der Entstehung von schwer lackierbaren und schmutzanfälligen Bereichen in der Befestigungseinrichtung besteht bei einer solchen Fixierung die Gefahr des Verzuges von Dämpfer- bzw. Außenzylinder sowie von Vorspannungsverlusten in der Verbindung zwischen Bypass-Ventilsystem und Schwingungsdämpfer.

Die Aufgabe der Erfindung besteht darin, einen hydraulischen Schwingungsdämpfer zu schaffen, bei dem das separate Bypass-Ventilsystem auf einfache Weise ohne Verzug des Mantelrohres am Schwingungsdämpfer montiert werden kann.

Die Aufgabe wird durch die kennzeichnenden Merkmale des Patentanspruches gelöst, wobei die Unteransprüche vorteilhafte Ausführungsformen darstellen.

Erfindungsgemäß ist das Ventilgehäuse des Bypass-Ventilsystems mittels eines mindestens einen Durchlaß für mindestens eine Strömungsverbindung zwischen dem Schwingungsdämpfer und dem Bypass-Ventilsystem aufweisenden, beidseitig konkav geformten Distanzteils am Mantelrohr des Schwingungsdämpfers befestigt.

Das Distanzteil weist zwei sich gegenüberliegende konkav geformte Flächen auf, die jeweils am Umfang des Mantelrohrs des Schwingungsdämpfers und dem zylinderförmigen Ventilgehäuse anliegen. In einer Ausführung der Erfindung ist das Distanzteil über eine Schweiß-, Löt- oder Klebeverbindung vorteilhafterweise über mehrere Verbindungspunkte mit dem Mantelrohr des Schwingungsdämpfers und dem Ventilgehäuse des Bypass-Ventilsystems verbunden.

Eine weitere vorteilhafte Ausführung der Erfindung besteht darin, daß in einem oder mehreren Durchlässen des Distanzteils eine die Strömungsverbindung zwischen dem Schwingungsdämpfer und dem Bypass-Ventilsystems bildende Hülse vorgesehen ist. Diese Strömungsverbindung wird vorteilhafterweise mittels eines vorgespannten, um die Hülse angeordneten Dichtungsring abgedichtet. Die Vorspannung des Dichtungsrings kann beispielsweise durch die den Abstand zwischen dem Mantelrohr des Schwingungsdämpfers und dem Ventilgehäuse des Bypass-Ventilsystems definierende Hülse selbst erfolgen.

Die Vorteile des erfindungsgemäßen Schwingungsdämpfers liegen insbesondere in der kompakten Bauform sowie in der einfachen Montage und Positionierung der Bauteile zueinandern. Gleichzeitig weist der Schwingungsdämpfer wenige Kanten und keine hinterschnittenen Flächen auf, wodurch das Aufbringen von Schutzschichten vereinfacht ist und die Schmutzanfälligkeit gesenkt wird.

Die Erfindung ist nachfolgend anhand von Ausführungsbeispielen näher beschrieben. Die zugehörigen Zeichnungen zeigen:
- Fig. 1: einen Ausschnitt eines Einrohr-Schwingungsdämpfers mit einem Bypass-Ventilsystem und
- Fig. 2: eine Ausführungsform der Befestigung von Schwingungsdämpfer und Bypass-Ventilsystem.

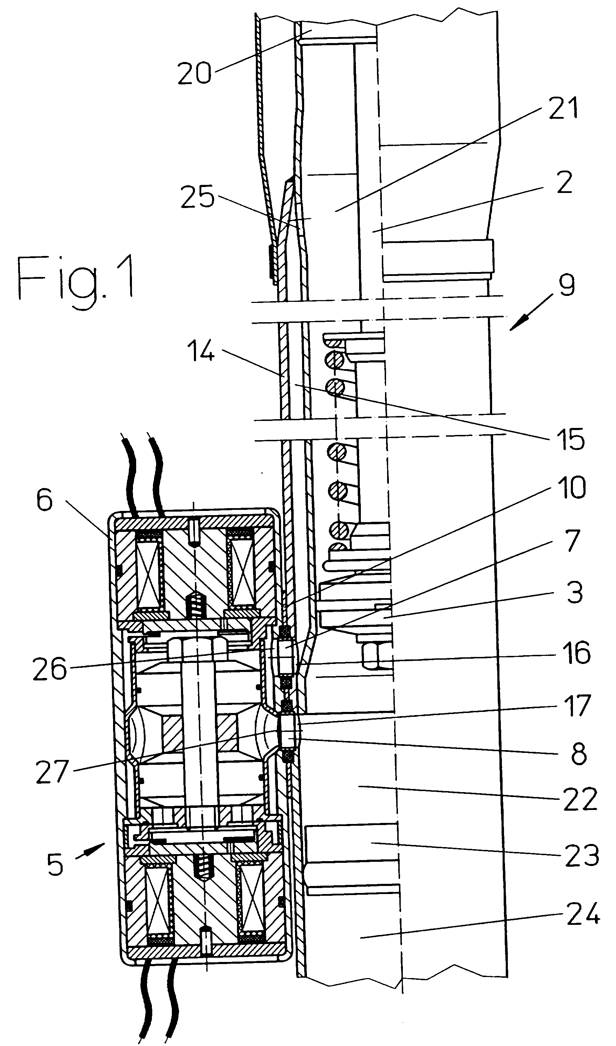

Der in Fig. 1 gezeigte hydraulische Einrohrschwingungsdämpfer 9 besteht im wesentlichen aus einem gleichzeitig als Mantelrohr dienenden Dämpferzylinder 14 und einer in dem Dämpferzylinder eintauchenden, in einem mit nicht dargestellten druckabhängigen Drosselventilen ausgestatteten Dämpfungskolben 3 endenden Kolbenstange 2, die durch die Führungs- und Dichtungseinheit 20 im Dämpferzylinder 14 geführt ist. Der Dämpfungskolben 3 unterteilt den Dämpfungsflüssigkeit enthaltenden Dämpferzylinder 14 in einen oberen Arbeitsraum 21 und einen unteren Arbeitsraum 22, wobei der untere Arbeitsraum durch einen Trennkolben 23 vom Ausgleichsraum 24 getrennt ist. Der Trennkolben 23 ist an der Wand des Dämpferzylinders 14 schwimmend gelagert und ermöglicht so die Ölverdrängung der einfahrenden Kolbenstange 2.

Der zweiteilig ausgebildete Dämpferzylinder 14 besteht aus zwei Rohrteilen, die sich im Bereich des Ein- und Ausfahrhubes des Dämpfungskolben 3 zur Bildung der Bypass-Passage 15 gegeneinander abgedichtet überlappen. Die Bypass-Passage 15 weist einen Durchlaß 25 zum oberen Arbeitsraum 21 und einen weiteren Durchlaß 16 zum Bypass-Ventilsystem 5 auf, das wiederum eine Strömungsverbindung 17 zum unteren Arbeitsraum 22 aufweist. Das Bypass-Ventilsystem 5 ist mittels eines beidseitig konkav geformten Distanzteil 10 am Dämpferzylinder 14 befestigbar. Zur Bildung der Strömungsverbindungen zwischen dem Bypass-Ventilsystem 5 und der Bypass-Passage 15 beziehungsweise dem unteren Arbeitsraum 22 des Schwingungsdämpfers 9 weist das Distanzteil 10 zwei Durchlässe 7 und 8 auf, die bei der Montage des Schwingungsdämpfers 9 zu den Durchlässen 16 und 25 des Dämpferzylinders 14 sowie zu den Durchlässen 26 und 27 des Bypass-Ventil-System 5 justiert werden.

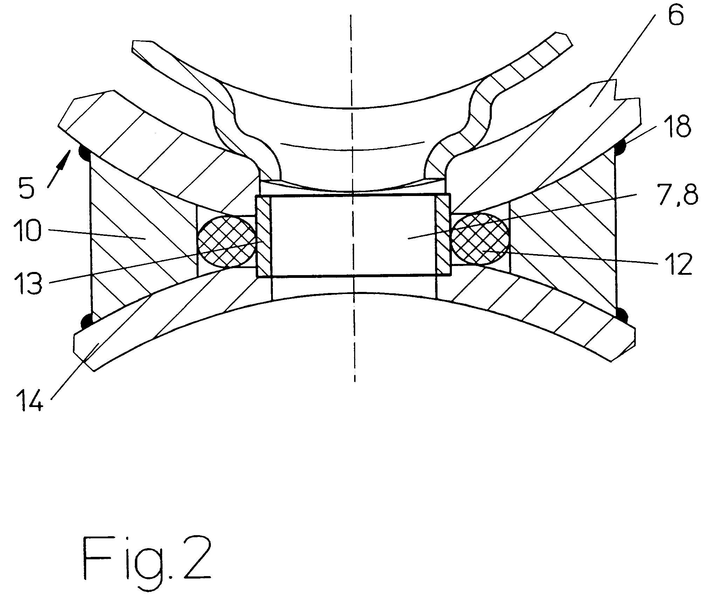

Ein Beispiel für die Abdichtung der Strömungsverbindungen ist in Fig. 2 gezeigt. Dazu ist in den Durchlässen 7, 8 des Distanzteils 10 eine Hülse 13 angeordnet, die gleichzeitig den Abstand zwischen dem Mantelrohr 14 des Schwingungsdämpfers 9 und dem Ventilgehäuse 6 des Bypass-Ventilsystem 5 vorgibt. Der Durchmesser und die Größe des Dichtungsrings 12 ist so gewählt, daß er einmal durch die von ihm umgebene Hülse 13 und andererseits durch den Abstand von Mantelrohr 14 und Ventilgehäuse 6 vorgespannt wird.

Die Verbindung des Distanzteils 10 am Mantelrohr 14 und dem Ventilgehäuse 6 erfolgt über jeweils mehrere Schweißpunkte 18.

### Bezugszeichenliste

- 2: Kolbenstange
- 3: Dämpfungskolben
- 5: Bypass-Ventilsystem
- 6: Ventilgehäuse
- 7: Durchlaß
- 8: Durchlaß
- 9: Schwingungsdämpfer
- 10: Distanzteil
- 12: Dichtungsring
- 13: Hülse
- 14: Mantelrohr, Dämpfungszylinder
- 15: Bypass-Passage
- 16: Durchlaß
- 17: Strömungsverbindung
- 18: Schweißpunkt
- 20: Führungs- und Dichtungseinheit
- 21: Arbeitsraum
- 22: Arbeitsraum
- 23: Trennkolben
- 24: Ausgleichsraum
- 25: Durchlaß
- 26: Durchlaß
- 27: Durchlaß

## Patentansprüche

1. Hydraulischer Schwingungsdämpfer für Kraftfahrzeuge, bestehend aus einem mit Dämpfungsflüssigkeit gefüllten Dämpferzylinder, in dem ein mit einer Kolbenstange verbundener, mit druckabhängigen Drosselventilen versehener Dämpfungskolben gleitet, der den Dämpferzylinder in zwei Arbeitsräume unterteilt, und bei dem zur Verstellung der Dämpfungskraft eine Bypass-Passage vorgesehen ist, deren Strömungsquerschnitt von einem außerhalb des Schwingungsdämpfers angeordneten, in einem rohrförmigen Ventilgehäuse untergebrachten Bypass-Ventilsystem steuerbar ist, dadurch gekennzeichnet, daß das Ventilgehäuse (6) des Bypass-Ventilsystems (5) mittels eines mindestens einen Durchlaß (7,8) für mindestens eine Strömungsverbindung zwischen dem Schwingungsdämpfer (9) und dem Bypass-Ventilsystem (5) aufweisenden, beidseitig konkav geformten Distanzteils (10) am Mantelrohr(14) des Schwingungsdämpfers (9) befestigt ist.

2. Schwingungsdämpfer nach Anspruch 1, dadurch gekennzeichnet, daß das Distanzteil (10) über eine Schweiß-, Löt- oder Klebeverbindung mit dem Mantelrohr des Schwingungsdämpfers (9) und dem Ventilgehäuse (6) des Bypass-Ventilsystems (5) verbunden ist.

3. Schwingungsdämpfer nach Anspruch 2, dadurch gekennzeichnet, daß das Distanzteil (10) mit mehreren Schweißpunkten (18) am Mantelrohr des Schwingungsdämpfer (9) und/oder am Ventilgehäuse (6) befestigt ist.

4. Schwingungsdämpfer nach einem der Ansprüche 1 bis 3, dadurch gekennzeichnet, daß im Durchlaß (7,8) des Distanzteils (10) eine die Strömungsverbindung zwischen dem Schwingungsdämpfer (9) und dem Bypass-Ventilsystem (5) bildende Hülse (13) vorgesehen ist.

5. Schwingungsdämpfer nach einem der Ansprüche 1 bis 4, dadurch gekennzeichnet, daß die Strömungsverbindung zwischen dem Schwingungsdämpfer (9) und dem Bypass-Ventilsystems (5) mittels eines vorgespannten Dichtungsringes (12) abgedichtet ist.

6. Schwingungsdämpfer nach Anspruch 5,dadurch gekennzeichnet, daß der Dichtungsring (12) durch die den Abstand zwischen dem Mantelrohr (14) des Schwingungsdämpfers (9) und dem Ventilgehäuse (6) des Bypass-Ventilsystems (5) definierende Hülse (13) vorgespannt ist.

## Claims

1. A hydraulic vibration damper for motor vehicles consisting of a damper cylinder filled with a damping fluid, in which damper cylinder slides a damping piston connected to a piston rod and provided with pressure-dependent throttle valves, which damping piston subdivides the damper cylinder into two working chambers and wherein for the purpose of adjusting the damping force a bypass passage is provided, the flow cross-section of which can be controlled by a bypass valve system which is disposed outside the vibration damper and is accommodated in a tubular valve housing, characterised in that the valve housing (6) of the bypass valve system (5) is attached to the peripheral tube (14) of the vibration damper (9) by means of a distance piece (10) which is formed concavely on both sides and comprises at least one through passage (7, 8) for at least one flow connection between the vibration damper (9) and the bypass valve system (5).

2. A vibration damper according to claim 1, characterised in that the distance piece (10) is connected by way of a weld, solder or adhesive connection to the peripheral tube of the vibration damper (9) and the valve housing (6) of the bypass valve system (5).

3. A vibration damper according to claim 2, characterised in that the distance piece (10) is attached at several weld points (18) to the peripheral tube of the vibration damper (9) and/or to the valve housing (6).

4. A vibration damper according to any one of claims 1 to 3, characterised in that a sleeve (13) which forms the flow connection between the vibration damper (9) and the bypass valve system (5) is provided in the through passage (7, 8) of the distance piece (10).

5. A vibration damper according to any one of claims 1 to 4, characterised in that the flow connection between the vibration damper (9) and the bypass valve system (5) is sealed by means of a prestressed sealing ring (12).

6. A vibration damper according to claim 5, characterised in that the sealing ring (12) is prestressed by virtue of the sleeve (13) which defines the distance between the peripheral tube (14) of the vibration damper (9) and the valve housing (6) of the bypass valve system (5).

## Revendications

1. Amortisseur hydraulique de vibrations pour véhicules, constitué d'un cylindre d'amortissement rempli d'un liquide d'amortissement, dans lequel coulisse un piston d'amortissement relié à une tige de piston et doté de clapets d'étranglement asservis à la pression, qui divise le cylindre d'amortissement en deux chambres de travail, et dans lequel est prévu, en vue de l'ajustement de la force d'amortissement, un passage de dérivation dont la section de passage peut être commandée par un système de clapet de dérivation disposé à l'extérieur de l'amortisseur de vibrations, installé dans un boîtier tubulaire de clapet caractérisé en ce que le boîtier (6) de clapet du système (5) de clapet de dérivation est fixé au tube d'enveloppe (14) de l'amortisseur de vibrations (9) au moyen d'une pièce d'écartement (10) de forme biconcave, présentant au moins un passage (7, 8) pour au moins un raccordement d'écoulement entre l'amortisseur de vibrations (9) et le système (5) de clapet de dérivation.

2. Amortisseur de vibrations selon la revendication 1, caractérisé en ce que la pièce d'écartement (10) est reliée au tube d'enveloppe de l'amortisseur de vibrations (9) et au boîtier (6) de clapet du système (5) de clapet de dérivation par une liaison par soudage, par brasage ou par collage.

3. Amortisseur de vibrations selon la revendication 2, caractérisé en ce que la pièce d'écartement (10) est fixée au tube d'enveloppe de l'amortisseur de vibrations (9) et/ou au boîtier (6) de clapet par plusieurs points de soudure (18).

4. Amortisseur de vibrations selon l'une des revendications 1 à 3, caractérisé en ce qu'une douille (13) formant le raccordement d'écoulement entre l'amortisseur de vibrations (9) et le système (5) de clapet de dérivation, est prévue dans le passage (7, 8) de la pièce d'écartement (10).

5. Amortisseur de vibrations selon l'une des revendications 1 à 4, caractérisé en ce que le raccordement d'écoulement entre l'amortisseur de vibrations (9) et le système (5) de clapet de dérivation est rendu étanche au moyen d'une bague d'étanchéité (12) précontrainte.

6. Amortisseur de vibrations selon la revendication 5, caractérisé en ce que la bague d'étanchéité (12) est précontrainte par la douille (13) définissant la distance entre le tube d'enveloppe (14) de l'amortisseur de vibrations (9) et le boîtier (6) de clapet du système (5) de clapet de dérivation.
